# EUROPÄISCHE PATENTSCHRIFT

(11) **EP 0 470 526 B1**
(45) Veröffentlichungstag und Bekanntmachung des Hinweises auf die Patenterteilung: **17.11.1994**
(21) Anmeldenummer: 91113064.9
(22) Anmeldetag: 02.08.1991
(51) Int. Cl.: B60G 11/24

(54) **Vorrichtung zum Befestigen einer Gummifederachse am Rahmen eines Fahrzeuges**
Device for mounting a rubber-sprung axle on the frame of a vehicle
Dispositif de fixation d'un essieu à ressort en caoutchouc au chassis d'un véhicule

(30) Priorität: 07.08.1990 DE 9011498 U
(43) Veröffentlichungstag der Anmeldung: 12.02.1992
(73) Patentinhaber: AL-KO KOBER AG, D-89359 Kötz (DE)
(72) Erfinder: Wöhrle, Rudolf, W-8873 Ichenhausen/Rieden (DE); Stachler, Siegfried, W-8877 Burtenbach (DE)
(74) Vertreter: Ernicke, Hans-Dieter, Dipl.-Ing.

(56) Entgegenhaltungen:
- DE-A- 2 740 890
- DE-B- 1 288 455
- FR-A- 829 371

## Beschreibung

Die Erfindung befaßt sich mit einer Vorrichtung zum Befestigen einer Gummifederachse am Rahmen eines Fahrzeuges, insbesondere eines Fahrzeug-Anhängers, bestehend aus zwei zweiteiligen Spannböcken, die mit ihren Teilen das zwischen ihnen befindliche Trägerrohr der Gummifederachse teilweise umgreifen und mittels deckungsgleiche Bohrungen aufweisenden Flanschstegen am Fahrzeug-Rahmen unter Wahrung eines Abstandes des Trägerrohres zum Fahrzeug-Rahmen angeschraubt sind. Durch die FR-A-829 371 ist eine Anordnung zum Befestigen einer Gummifederachse an einem Querholm des Fahrzeug-Rahmens für die Abstützung eines Radlenkers einer Einzelrad-Aufhängung bekannt. Das Trägerrohr der Gummifederachse ist im Querschnitt kreisförmig. Es wird von zwei im Abstand voneinander angeordneten reifenförmigen Spanngliedern hälftig umschlungen, die am Rahmen unter Wahrung einer Zugspannung festgeschraubt werden, wobei eine Distanzleiste dafür sorgt, daß das Trägerrohr nicht den Fahrzeug-Rahmen berühren kann.

Die Achse des Trägerrohres erstreckt sich parallel zur Fahrzeug-Längsachse. Die vorbekannte Vorrichtung weist wegen der Einzelrad-Aufhängung eine nur kurze Baulänge auf, bei welcher nicht das Problem der Anpassung an unterschiedlich breite Fahrzüge auftaucht.

Die Gummifederachsen von Fahrzeug-Anhängern erstrecken sich quer zur Fahrzeug-Längsachse und reichen über die gesamte Fahrzeugbreite. Bei den vorbekannten Fahrzeug-Anhängern wird das einzelne Trägerrohr der Gummifederachse schweißtechnisch mit Auflageböcken versehen, deren Abstand voneinander und deren Flanschbreite dem Fahrzeugrahmen angepaßt ist, an dem die Befestigung der Auflageböcke mittels Schrauben erfolgt. Weil die Abmessungen der Fahrzeugrahmen unter den verschiedenen Herstellern erheblich voneinander abweichen, ist es erforderlich, daß der Hersteller der Gummifederachse die Schweißverbindung zwischen deren Trägerrohr und dem Auflagebock nur entsprechend dem Kundenwunsch ausführen kann.

Der Hersteller von Gummifederachsen muß daher entweder eine aufwendige Lagerhaltung für die verschiedenen Abnehmer unterhalten oder die Schweißverbindung zwischen dem Trägerrohr und dem Auflagebock von Fall zu Fall vornehmen. Beide Möglichkeiten wirken sich kalkulatorisch negativ aus.

Der Erfindung liegt daher die Aufgabe zugrunde, eine Vorrichtung zum Befestigen des Trägerrohres einer Gummifederachse am Rahmen eines Fahrzeuges zu entwickeln, die ohne eine solche bisher übliche Schweißverbindung auskommt und es dem Käufer der Gummifederachse ermöglicht, die Befestigung des Trägerrohres unabhängig von unterschiedlich breiten Fahrzeug-Rahmen in einfacher Weise schraubtechnisch vorzunehmen.

Ausgehend von der FR-A-829 371 wird dieses Problem der Erfindung dadurch gelöst, daß die Spannböcke längs des quer zur Fahrzeuglängsachse sich erstreckenden, im Querschnitt prismatischen Trägerrohres zur Anpassung an den Abstand der Längsholme des einzelnen in unterschiedlicher Breite vorkommenden Fahrzeug-Rahmens verstellbar sind, wobei der einzelne Spannbock aus zwei im wesentlichen U-förmigen, gegeneinander gerichteten und das Trägerrohr zwischen sich formschlüssig einspannenden Teilen besteht, die über parallel zueinander angeordnete Flanschstege miteinander und am Fahrzeug-Rahmen angeschraubt sind.

Nach dem Lösungsprinzip der Erfindung wird das Trägerrohr erst mit dem Anschrauben des Spannbockes am Fahrzeugrahmen zwischen den einzelnen Teilen des Spannbockes zentriert und festgespannt. Eine solche Zentrierung und Festspannung ist unabhängig von der Lage des Spannbockes. Aus diesem Grunde kann der Spannbock längs des Trägerrohres der Gummifederachse beliebig verstellt und damit auch an beliebiger Stelle am Fahrzeugrahmen angeschraubt werden.

Diese erfindungsgemäße Konzeption hat noch eine weitere, nicht ohne weiteres vorhersehbare technische Wirkung. Indem nämlich das Trägerrohr der Gummifederachse zwischen den beiden Teilen des Spannbockes festgespannt wird, erfährt die Wandung des Trägerrohres eine äußere Abstützung gegen die Verformungskraft der Gummifederelemente, die sich innerhalb des Trägerrohres befinden und beim Radeinfedern eine Walkverformung erfahren. Gummifederachsen dieser Gestaltung sind beispielsweise durch das DE-GM 69 11 835 bekannt geworden.

Mit der Erfindung wird der Vorteil erreicht, die Lage der Spannböcke an denjenigen Stellen des Trägerrohres vorzusehen, wo der Verformungsdruck, der auf die Wand des Trägerrohres wirkt, am größten ist. Erfahrungsgemäß ist dies meistens am jeweiligen stirnseitigen Rand des Trägerrohres der Fall. Zufolge der Abstützung des Trägerrohres durch die Teile der Spannböcke, welche das Trägerrohr zwischen sich festspannen, ist schließlich die Möglichkeit gegeben, die Wandstärke des Trägerrohres zu reduzieren und damit die Kosten der Gummifederachse zu senken, ohne die Festigkeit des Trägerrohres zu verringern.

Es ist zwar durch die Anmelderin bekannt geworden, die Trägerrohre von Gummifederachsen mit Hilfe von schellenartigen Beschlägen mit Deichselrohren des Fahrgestelles schraubtechnisch zu verbinden und Schweißungen zu vermeiden. Hierzu werden zwei Stahlbleche so verformt, daß ihre Innenflächen den Konturen des Deichselrohres und des dazu quer liegenden Trägerrohres der Gummifederachse angepaßt sind. Solche Beschläge werden dann miteinander verschraubt, wobei außerdem der dem Deichselrohr zugeordnete Beschlagteil mit diesem mit Hilfe einer durchgehenden Verschraubung verbunden wird. Bei solchen Anordnungen handelt es sich jedoch um Fahrzeuge geringerer Belastung, welche für die Anwendung bei Fahrzeuganhängern, wie Wohnwagen und dgl., nicht zugelassen sind. Auch die Festigkeit der genannten Schellenverbindung würde nicht ausreichen, anstelle der vorerwähnten Schweißkonstruktion des Standes der Technik für die Verbindung von üblichen Gummifederachsen mit Wohnwagen und dgl. Fahrzeuganhänger zu verbinden.

Das Erfindungprinzip läßt sich in verschiedener Weise konstruktiv ausführen.

Bei einem ersten Ausführungsbeispiel sieht die Erfindung vor, daß die Anlageflächen der Spannbock-Teile einer im Querschnitt sechseckigen Außenmantelfläche des Trägerrohres derart angepaßt sind, daß der obere Spannbock-Teil die vier oberen Seiten und der untere Spannbock-Teil die zwei restlichen unteren Seiten der Außenmantelfläche des Trägerrohres überdecken. Damit ergibt sich eine Trennebene zwischen den beiden Spannbock-Teilen, die im Bereich der breitesten Stelle des Trägerrohres liegt, weil bei den verkehrsüblichen und besonders vorteilhaften Gummifederachsen die unteren beiden Flächen des Trägerrohres genauso breit wie die vier oberen Flächen sind.

Bei einem anderen Ausführungsbeispiel der Erfindung weist der Spannbock-Unterteil ein etwa U-förmiges Mittelstück mit an dessen Schenkelenden seitlich wegragenden Flanschstegen auf, wobei die aufrechten Schenkel des U-förmigen Mittelstückes sowie die Flanschstege durch abgewinkelte Seitenlappen versteift sind. Dieser Spannbock-Unterteil nimmt im Schenkelbereich die Zugkräfte auf, welche durch Verspannung des Trägerrohres zwischen den Spannbock-Teilen sowie durch die Last des auf der Fahrzeugachse ruhenden Fahrzeuges gegeben sind. Die Festigkeit der Schenkel dieses U-förmigen Mittelstückes wird durch die abgewinkelten Seitenlappen wesentlich erhöht.

Der Spannbock-Oberteil weist beim Ausführungsbeispiel der Erfindung hingegen ein im Querschnitt radial zur Trägerrohrachse U-förmiges Gebilde auf, dessen Steg zur Anlage am Fahrzeug-Rahmen bestimmt ist sowie mindestens eine Bohrung aufweist und dessen Schenkel mit prismatischen Aussparungen zur Anpassung an die obere Mantelfläche des Trägerrohres versehen sind.

Hierbei erweist es sich als besonders vorteilhaft, wenn die Schenkel des Spannbock-Oberteiles die mit den abgewinkelten Seitenlappen versehenen Schenkel des Spannbock-Unterteiles umgreifen, wodurch der Spannbock-Unterteil eine parallel zur Achsenrichtung gesehene Führung erhält.

Damit die Führung der Spannbock-Teile nicht überbestimmt wird, sieht die Erfindung im Rahmen einer Ausgestaltung vor, daß der Spannbock-Unterteil an den Übergängen seines unteren Steges zu den aufrechten Schenkeln eine rinnenartige Auskehlung aufweist, in welche die Schenkelenden des Spannbock-Oberteiles mit Spiel eingreifen. Damit ist sichergestellt, daß die Spannbock-Teile beim Festspannen sich nicht gegenseitig abstützen können.

Schließlich erweist es sich im Sinne der Erfindung als vorteilhaft, wenn die Flansche des Spannbock-Unterteiles an ihrem Ende eine aufkragende Rippe aufweisen, welche an der Flanschunterseite des Spannbock-Oberteils zwecks Distanzierung beider Flanschstege abgestützt sind. Beim Verschrauben der Spannböcke am Fahrzeugrahmen wird damit sichergestellt, daß die Spannbock-Teile auch untereinander die geforderte Spannung erzeugen, um das Trägerrohr der Gummifederachse fest einzuspannen.

Einzelheiten der Erfindung sind in den Zeichnungen schematisch und beispielsweise dargestellt. Es zeigen:
- Fig. 1:: einen Querschnitt durch eine Gummifederachse mit einem daran längs verschieblich geführten Spannbock,
- Fig. 2:: eine Stirnansicht der Anordnung gemäß Fig. 1 in Richtung des Pfeiles A,
- Fig. 3:: eine perspektivische Ansicht des in Fig. 1 dargestellten Spannbock-Unterteiles und
- Fig. 4:: eine perspektivische Ansicht des in Fig. 1 dargestellten Spannbock-Oberteiles.

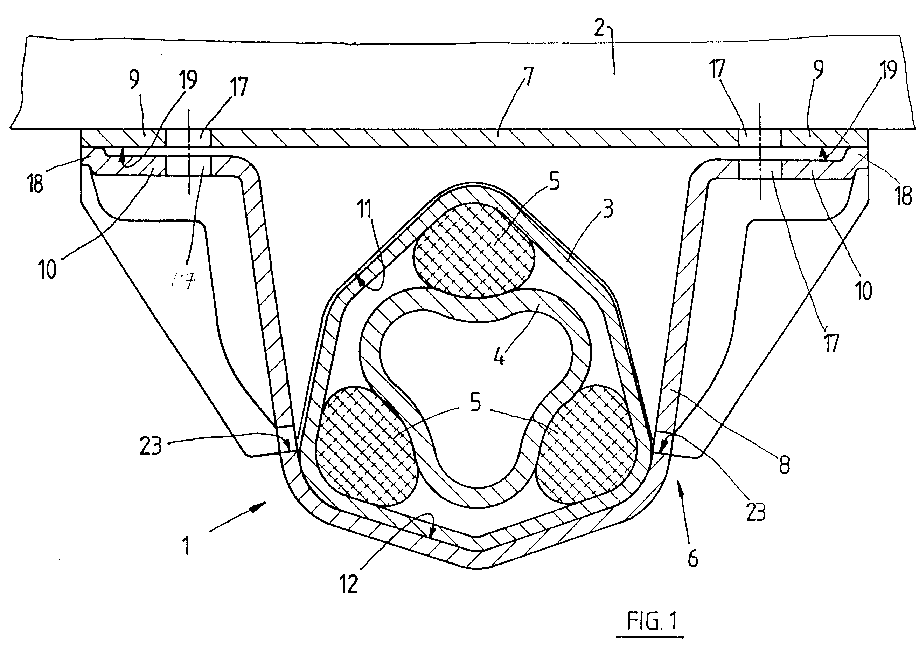

Im Ausführungsbeispiel der Fig. 1 ist im Querschnitt eine Gummifederachse (1) herkömmlicher Art dargestellt, die mit einem Spannbock (6) an einem symbolisch angedeuteten Fahrzeugrahmen (2) schraubtechnisch befestigt wird, wobei die Erfindung davon ausgeht, daß der Spannbock (6) längs der Gummifederachse (1) verstellbar sein soll, um die günstigste Stellung am Fahrzeugrahmen (2) zu erreichen. Damit soll ein und dieselbe Konstruktion der Gummifederachse (1) mit Spannbock (6) für unterschiedlich breite Fahrzeuge, insbesondere Wohnwagen-Anhänger, eingesetzt werden können.

Die Gummifederachse (1) ist in ihrem Aufbau dem Stand der Technik entsprechend gestaltet. Innerhalb eines ortsfesten Trägerrohres (3), welches mit dem Fahrzeugrahmen (2) starr verbunden werden soll, sind beim Beispiel drei Gummistränge (5) längs der Achse des Trägerrohres (3) angeordnet, die innenseitig von einem Drehstab (4) beaufschlagt werden, an dem die Radschwinghebel der Achse sitzen. Die Querschnitte des Drehstabes (4) und des Trägerrohres (3) sind zueinander so angepaßt, daß sich mehr oder weniger oval verformte Gummistränge (5) bilden, die beim Verdrehen des Drehstabes (4) um dessen Längsachse in einen Walkzustand versetzt werden und sich dabei am Trägerrohr (3), das ortsfest gehalten ist, abstützen. Auf diese Weise wird ein Teil der Verformungskraft vom Trägerrohr (3) abgestützt und geht in eine Stauchbewegung am einzelnen Gummistrang (5) über. Ein anderer Teil der Verformungskraft wird durch die genannte Walkverformung des Gummistranges (5) verbraucht, die dadurch entsteht, daß der Drehstab (4) gegenüber dem ortsfesten Trägerrohr (3) verdreht wird.

Eine solche Gummifederachse, die konstruktiv durchaus auch beliebig anders ausgebildet sein kann, wird nun durch den zweiteiligen Spannbock (6) mit dem Fahrzeugrahmen (2) an beliebiger Stelle schraubtechnisch verbunden. Der Spannbock (6) weist den Spannbock-Oberteil (7) und den Spannbock-Unterteil (8) auf. Das Trägerrohr (3) ist zwischen den beiden Spannbock-Teilen (7,8) eingespannt und befindet sich demgemäß in Distanz zum Fahrzeugrahmen (2).

Der Spannbock-Oberteil (7) hat zunächst die Funktion, den Spannbock (6) am Fahrzeugrahmen (2) zu befestigen. Zu diesem Zweck weist der Spannbock-Oberteil (7) einen Flanschsteg (9) auf, der zur planen Anlage am Fahrzeugrahmen (2) ausgebildet ist. Der Spannbock-Unterteil (8) weist ebenfalls einen Flanschsteg (10) auf, der jedoch in Distanz zum Flanschsteg (9) des Spannbock-Oberteiles (7) liegt. Diese Distanz wird im Ausführungsbeispiel durch aufragende Rippen (18) des Spannbock-Unterteiles (10) gebildet, die sich an der Flanschunterseite (19) des Spannbock-Oberteiles (7) abstützen. Werden also die beiden Spannbock-Teile (7,8) durch Schrauben, welche durch die Bohrungen (17) geführt werden, mit dem Fahrzeugrahmen (2) verbunden, dann werden die in Distanz zueinander befindlichen Flanschstege (9,10) gegeneinander verspannt, was zur Folge hat, daß die Anlagefläche (11) des Spannbock-Oberteiles (7) und die Anlagefläche (12) des Spannbock-Unterteiles (8) die zwischen ihnen befindlichen Flächen des Trägerrohres (3) beaufschlagen und gegeneinander verspannen. Aus diesen Gründen sind die Anlageflächen (11,12) den Außenflächen des Trägerrohres (3) entsprechend angepaßt.

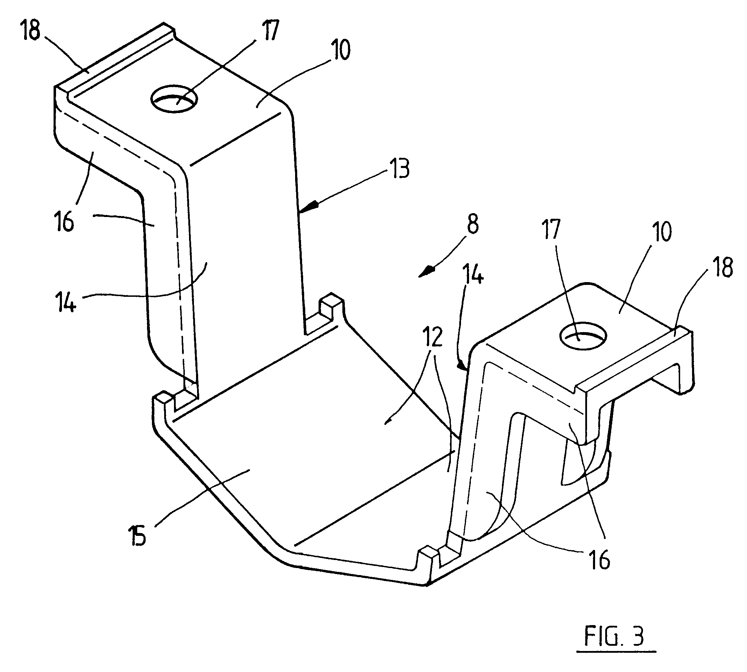

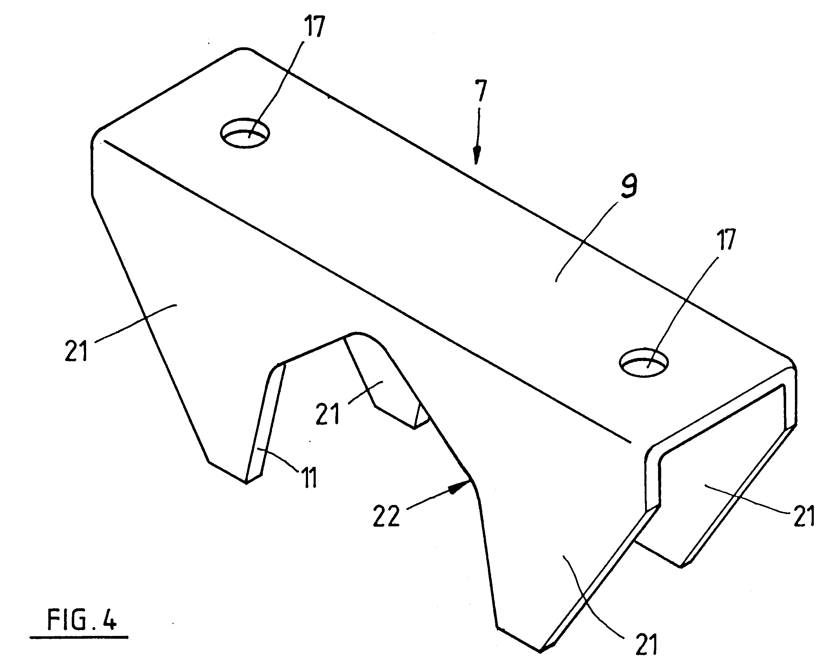

Die Raumform der einzelnen Spannbock-Teile (7,8) ist in den Figuren 3 und 4 in perspektivischer Darstellung verdeutlicht. Danach besitzt der Spannbock-Unterteil (8) gemäß Fig. 3 ein U-förmiges Mittelstück (13), das als unterer Steg durch die Anlageflächen (12) und durch die Schenkel (14) gebildet ist, die sich aufrecht erstrecken. Die Anlageflächen (12) bilden den unteren Steg (15) des U-förmigen Mittelstückes (13).

Die Schenkel (14) des U-förmigen Mittelstückes (13) sind an ihren Rändern mit abgewinkelten Seitenlappen (16) versehen, welche die Zug- und Biegefestigkeit der Schenkel (14) wesentlich erhöhen sollen. Demgemäß weisen die Schenkel (14) eine geringere Breite als der untere Steg (15) des U-förmigen Mittelstückes auf.

Am oberen Ende der Schenkel (14) ist der Flanschsteg (10) durch spanlose Verformung angesetzt, der die einzelne Bohrung (17) zur Schraubverbindung mit dem Fahrzeugrahmen (2) besitzt. Man erkennt in Fig. 3 ferner, daß am Endbereich dieses Flanschsteges (10) sich die aufragende Rippe (18) befindet, die an der Flansch-Unterseite (19) des Flanschsteges (9) des Spannbock-Oberteiles (7) sich abstützt.

Gemäß Fig. 4 besteht der Spannbock-Oberteil (7) hingegen aus einem im Querschnitt U-förmigen Gebilde, dessen Steg (9 ) am Fahrzeugrahmen (2) anliegt, wie dies in Fig. 1 dargestellt ist. Dementsprechend befinden sich in diesem Steg (9 ) des Spannbock-Oberteiles (7) die Bohrungen (17) zur Aufnahme der Schrauben für die Befestigung der Spannböcke (6) am Fahrzeugrahmen (2).

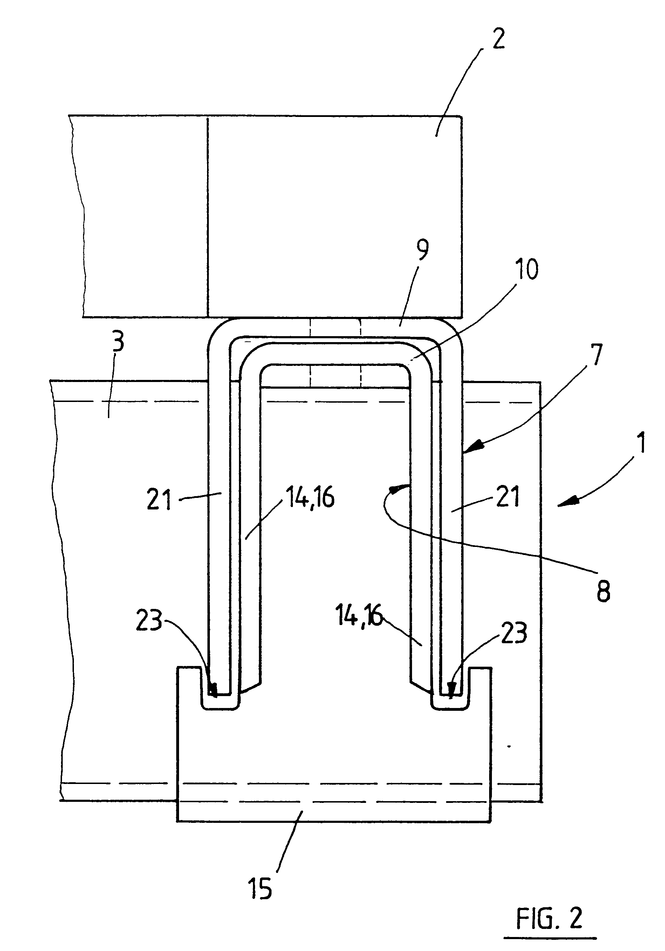

Die Schenkel (21) des Spannbock-Oberteiles (11) bilden zusammen mit dem Steg ( 9) die U-förmige Gestaltung des Spannbock-Oberteiles (7), im Querschnitt gesehen. Die Schenkel (21) weisen prismatische Aussparungen (22) auf, welche an die Oberfläche der obenliegenden Seiten des Trägerrohres (3) (vgl. Fig. 1) angepaßt sind. Außerdem sind, wie besonders auch Fig. 2 zeigt, die Schenkel (21) des Spannbock-Oberteiles (7) so dimensioniert, daß sie die Schenkel (14) mit den abgewinkelten Seitenlappen (16) außenseitig umgreifen und damit für diese Schenkel (14) eine seitliche Führung bzw. Begrenzung bilden.

Die Fig. 2 zeigt obendrein, daß die Schenkel (21) des Spannbock-Oberteiles (7) mit Spiel in rinnenartige Auskehlungen (23) des unteren Steges (15) des Spannbock-Unterteiles (8) eingreifen. Oberdrein ist aus Fig. 2 die Verringerung der Breite des Spannbock-Unterteiles durch die Abwinkelung der Seitenlappen (16) verdeutlicht.

Besonders die Fig. 2 zeigt, daß sowohl die Schenkel (14) des Spannbock-Unterteiles als auch die voneinander distanzierten Schenkel (21) des Spannbock-Oberteiles in einer verhältnismäßigen großen Breite auf die Außenfläche des Trägerrohres (3) einwirken und damit beim Verspannen der Spannbock-Teile (7,8) mit dem Fahrzeugrahmen (2) eine umfassende Abstützung für das Trägerrohr (3) bilden, so daß an dieser Stelle das stirnseitig offene Trägerrohr (3) sich nicht ausweiten kann. Infolgedessen ist es möglich, für die Dimensionierung des Trägerrohres (3) dünnwandigere Bleche zu verwenden, weil die Erfahrung gelehrt hat, daß das Trägerrohr (3) im endseitigen Bereich die geringste Widerstandskraft gegen Verformungen der Gummistränge (5) besitzt. Gerade in diesem gefährdeten Endbereich greifen die Schenkel (14,21) des Spannbockes (6) ein und verhindern eine unerwünschte Deformation des Trägerrohres (3).

## Patentansprüche

1. Vorrichtung zum Befestigen einer Gummifederachse (1) am Rahmen (2) eines Fahrzeuges, insbesondere eines Fahrzeug-Anhängers, bestehend aus zwei zweiteiligen Spannböcken (6), die mit ihren Teilen (7,8) das zwischen ihnen befindliche Trägerrohr (3) der Gummifederachse (1) teilweise umgreifen und mittels deckungsgleiche Bohrungen (17) aufweisenden Flanschstegen (9,10) am Fahrzeug-Rahmen (2) unter Wahrung eines Abstandes des Trägerrohres (3) zum Fahrzeug-Rahmen (2) angeschraubt sind, dadurch **gekennzeichnet**, daß die Spannböcke (6) längs des quer zur Fahrzeuglängsachse sich erstreckenden, im Querschnitt prismatischen Trägerrohres (3) zur Anpassung an den Abstand der Längsholme des einzelnen in unterschiedlicher Breite vorkommenden Fahrzeug-Rahmens (2) verstellbar sind, wobei der einzelne Spannbock (6) aus zwei im wesentlichen U-förmigen, gegeneinander gerichteten und das Trägerrohr (3) zwischen sich formschlüssig einspannenden Teilen (7,8) besteht, die über parallel zueinander angeordnete Flanschstege (9,10) miteinander und am Fahrzeug-Rahmen angeschraubt sind.

2. Vorrichtung nach Anspruch 1, dadurch **gekennzeichnet**, daß die Anlageflächen (11,12) der Spannbockteile (7,8) einer im Querschnitt sechseckigen Außenmantelfläche des Trägerrohres (3) derart angepaßt sind, daß der obere Spannbockteil (7) die vier oberen Seiten und der untere Spannbockteil (8) die zwei restlichen unteren Seiten der Außenmantelfläche des Trägerrohres (3) überdecken.

3. Vorrichtung nach Anspruch 1 oder 2, dadurch **gekennzeichnet**, daß der untere Spannbockteil (10) ein etwa U-förmiges Mittelstück (13) mit an dessen Schenkelenden seitlich wegkragenden Flanschstegen (10) aufweist, wobei die aufrechten Schenkel (14) des U-förmigen Mittelstückes (13) sowie die Flanschstege (10) durch abgewinkelte Seitenlappen (16) versteift sind.

4. Vorrichtung nach Anspruch 1 oder 2, dadurch **gekennzeichnet**, daß der obere Spannbockteil (7) ein im Querschnitt radial zur Trägerrohrachse U-förmiges Gebilde ist, dessen Flanschsteg (9) zur Anlage am Fahrzeugrahmen (2) bestimmt ist sowie mindestens eine Bohrung (17) aufweist und dessen Schenkel (21) mit prismatischen Aussparungen (22) zur Anpassung an die obere Mantelfläche des Trägerrohres (3) versehen sind.

5. Vorrichtung nach Anspruch 3 oder 4, dadurch **gekennzeichnet**, daß die Schenkel (21) des Spannbockoberteiles (7) die mit den abgewinkelten Seitenlappen (16) versehenen Schenkel (14) des Spannbockunterteils (8) umgreifen.

6. Vorrichtung nach einem der Ansprüche 1 bis 5, dadurch **gekennzeichnet**, daß der Spannbockunterteil (8) an den Übergängen seines unteren Steges (15) zu den aufrechten Schenkeln (14) eine rinnenartige Auskehlung (23) aufweist, in welche die Schenkelenden (21) des Spannbockoberteiles (7) mit Spiel eingreifen.

7. Vorrichtung nach einem der Ansprüche 1 bis 6, dadurch **gekennzeichnet**, daß die Flansche (10) des Spannbockunterteiles (8) an ihrem Ende eine aufkragende Rippe (18) aufweisen, welche an der Flanschunterseite (19) des Spannbockoberteiles (7) zwecks Distanzierung beider Flanschstege (9,10) abgestützt sind.

## Claims

1. Apparatus for securing a rubber spring axle (1) to the frame (2) of a vehicle, in particular a vehicle trailer, comprising two two-part clamping blocks (6) which partially embrace, by means of their parts (7, 8), the support pipe (3) of the rubber spring axle (1) located between them and are screwed to the vehicle frame (2) by means of flange webs (9, 10) having congruent bores (17), while maintaining a spacing of the support pipe (3) from the vehicle frame (2), characterized in that the clamping blocks (6) are adjustable longitudinally of the support pipe (3), which extends transversely to the longitudinal axis of the vehicle and is of prismatic cross-section, to adapt to the spacing of the longitudinal spar of the individual vehicle frame (2) found in various widths, the individual clamping block (6) comprising two substantially U-shaped parts (7, 8) which are directed towards one another and clamp the support pipe (3) between them in form-fitting manner and are screwed to one another and to the vehicle frame by way of flange webs (9, 10) arranged parallel to one another.

2. Apparatus according to Claim 1, characterized in that the bearing surfaces (11, 12) of the clamping block parts (7, 8) are matched to an outer casing surface of the support pipe (3) which is of hexagonal cross-section such that the upper clamping block part (7) covers the four upper sides and the lower clamping block part (8) covers the two remaining lower sides of the outer casing surface of the support pipe (3).

3. Apparatus according to Claim 1 or 2, characterized in that the lower clamping block part (10) has an approximately U-shaped central piece (13) having at the ends of the legs thereof laterally bent-away flange webs (10), the upright legs (14) of the U-shaped central piece (13) and the flange webs (10) being reinforced by angled-off lateral tabs (16).

4. Apparatus according to Claim 1 or 2, characterized in that the upper clamping block part (7) is a structure which in cross-section radial to the support pipe axis is U-shaped and whereof the flange web (9) is intended to bear against the vehicle frame (2) and has at least one bore (17) and whereof the legs (21) are provided with prismatic cutouts (22) in order to match the upper casing surface of the support pipe (3).

5. Apparatus according to Claim 3 or 4, characterized in that the legs (21) of the clamping block upper part (7) embrace the legs (14) of the clamping block lower part (8) which are provided with the angled-off lateral tabs (16).

6. Apparatus according to one of Claims 1 to 5, characterized in that the clamping block lower part (8) has at the transitions of its lower web (15) to the upright legs (14) a groove-like hollowing (23) in which the leg ends (21) of the clamping block upper part (7) engage with play.

7. Apparatus according to one of Claims 1 to 6, characterized in that the flanges (10) of the clamping block lower part (8) have at their end a projecting rib (18) which is supported against the flange underside (19) of the clamping block upper part (7) for the purpose of spacing both flange webs (9, 10).

## Revendications

1. Dispositif de fixation d'un essieu (1) à ressort en caoutchouc au châssis (2) d'un véhicule, notamment à celui d'une remorque de véhicule, constitué de deux supports de montage (6) réalisés en deux parties, qui entourent partiellement par leur parties (7, 8) le tube porteur (3) de l'essieu (1) à ressort en caoutchouc, qui se trouve entre eux, et qui sont vissés au châssis (2) de véhicule au moyen de brides (9, 10) présentant des alésages (17) qui coincident, en maintenant un écartement entre le tube porteur (3) et le châssis (2) du véhicule, caractérisé en ce que les supports de montage (6) peuvent être déplacés le long du tube porteur (3) s'étendant transversalement à l'axe longitudinal du véhicule et de section transversale prismatique, pour s'adaptater à l'écartement des longerons du châssis (2) de chaque véhicule de largeur différente, chaque support de montage (6) étant constitué de deux parties (7, 8) sensiblement en forme de U, dirigées l'une vers l'autre, bloquant entre elles, avec complémentarité de forme, le tube porteur (3) et vissées entre elles et au châssis de véhicule par l'intermédiaire de brides (9, 10) disposées parallèlement les unes aux autres.

2. Dispositif selon la revendication 1, caractérisé en ce que les surfaces d'appui (11, 12) des parties (7, 8) de support de montage sont adaptées à une surface latérale extérieure de section hexagonale du tube porteur (3), de façon telle que la partie supérieure (7) du support de montage, les quatre côtés supérieurs et la partie inférieure (8) du support de montage recouvrent les deux côtés inférieurs restants de la surface latérale extérieure du tube porteur (3).

3. Dispositif selon la revendication 1 ou 2, caractérisé en ce que la partie inférieure (10) du support de montage comporte une pièce médiane (13) sensiblement en forme de U, ayant aux extrémités de ses branches des brides (10) en porte-à-faux, les branches verticales (14) de la pièce médiane (13) en forme de U ainsi que les brides (10) étant raidies par des pattes latérales (16) coudées.

4. Dispositif selon la revendication 1 ou 2, caractérisé en ce que la partie supérieure (7) du support de montage a, en coupe transversale radialement à l'axe du tube porteur, une conformation en U, dont la bride (9) est destinée à venir en appui sur le châssis (2) du véhicule et comporte au moins un trou (17) et dont les branches (21) sont munies d'évidements (22) prismatiques (22) d'adaptation à la surface latérale extérieure supérieure du tube porteur (3).

5. Dispositif selon la revendication 3 ou 4, caractérisé en ce que les branches (21) de la partie supérieure (7) du support de montage entourent les branches (14) de la partie inférieure (8) de support de montage, munies des pattes latérales (16) coudées.

6. Dispositif selon l'une des revendications 1 à 5, caractérisé en ce que la partie inférieure (8) du support de montage présente dans les zones de transition entre son âme inférieure (15) et les branches (14) verticales, un évidement en forme de gorge (23) dans lequel les extrémités (21) des branches de la partie supérieure (7) du support de montage pénètrent avec un jeu.

7. Dispositif selon l'une des revendications 1 à 6, caractérisé en ce que les brides (10) de la partie inférieure (8) du support de montage comportent à leur extrémité une nervure (18) qui s'applique au côté inférieur (19) de la bride de la partie supérieure (7) du support de montage, en vue de maintenir une distance entre les deux brides (9, 10).
